Europäisches Patentamt

European Patent Office

Office européen des brevets

(19)

(11) Veröffentlichungsnummer: **0 069 866**
**B1**

(12) # EUROPÄISCHE PATENTSCHRIFT

(45) Veröffentlichungstag der Patentschrift:
**17.04.85**

(51) Int. Cl.⁴: **B 22 D  17/22,** B 65 D  39/12

(21) Anmeldenummer: 82105114.1

(22) Anmeldetag: 11.06.82

(54) Verschlusselement für Bohrungen.

(30) Priorität: **15.06.81  DE 8117674 U**

(43) Veröffentlichungstag der Anmeldung:
**19.01.83 Patentblatt 83/3**

(45) Bekanntmachung des Hinweises auf die Patenterteilung:
**17.04.85 Patentblatt 85/16**

(84) Benannte Vertragsstaaten:
**AT BE CH DE FR GB IT LI LU NL SE**

(56) Entgegenhaltungen:
**CH - A - 278 246**
**DE - B - 2 436 039**
**FR - A - 1 106 772**
**US - A - 3 825 146**
**US - A - 3 837 522**

(73) Patentinhaber: **Huth, Heinrich, Waldstrasse 65-67,
D-6120 Michelstadt (DE)**

(72) Erfinder: **Huth, Heinrich, Waldstrasse 65-67,
D-6120 Michelstadt (DE)**

(74) Vertreter: **Schieferdecker, Lutz, Dipl.-Ing. et al,
Patentanwälte Dr.-Ing. P.K. Holzhäuser Dipl.-Met. W.
Goldbach Dipl.-Ing.Ing. L. Schieferdecker
Herrnstrasse 37, D-6050 Offenbach am Main (DE)**

BUNDESDRUCKEREI BERLIN

## Beschreibung

Die Erfindung betrifft ein Verschlußelement für Bohrungen, das ein Verschlußstück mit einem Absatz für einen Dichtungsring und mit einer Gewindebohrung für eine Spannschraube sowie einen außen konischen Spannring und einen geschlitzten Klemmring sowie einen Zwischenring umfaßt.

Verschlußelemente der genannten Art werden z. B. zum Abdichten der Bohrungen in Kühlplatten von Spritzgußformen benötigt. Da das Kühlmittel durch die Bohrungen nicht unkontrolliert fließen soll, müssen die parallel und sich kreuzend angeordneten Bohrungen an vorgegebenen Stellen verschlossen werden. Bei den hierzu benutzten, bekannten Verschlußelementen ist der Dichtungsring zwischen einer konischen Ringfläche des Verschlußstückes und einer Stirnfläche des außen konischen Spannringes angeordnet, durch den der geschlitzte Klemmring beim Anziehen der Spannschraube aufgeweitet und dadurch ein Verklemmen des Verschlußelementes in der Bohrung erzielt werden.

Das bekannte Verschlußelement dichtet die Bohrungen grundsätzlich in zufriedenstellender Weise ab. Schwierigkeiten ergeben sich aber, wenn die Lage des Verschlußelementes korrigiert bzw. dieses z. B. zum Reinigen der Bohrungen nach längerem Gebrauch wieder gelöst werden soll. Beim Herausdrücken des Verschlußelementes besteht nämlich die Gefahr, daß sich der Klemmring mit der Innenwand der Bohrung verkeilt, so daß sich das Verschlußelement überhaupt nicht mehr oder nicht vollständig aus der Bohrung entfernen läßt.

Der Erfindung liegt daher die Aufgabe zugrunde, ein leicht ein- und auszubauendes Verschlußelement zu schaffen, das ferner möglichst kurz ist und sich kostengünstig herstellen läßt.

Zur Lösung dieser Aufgabe sieht die Erfindung vor, daß die Spannschraube eine Senkkopfschraube ist, daß der außen kegelstumpfförmige Spannring zugleich zur Aufnahme des Kopfes der Senkkopfschraube innen gleichgerichtet kegelstumpfförmig ist, daß der geschlitzte Klemmring ein Drahtring mit kreisförmigem Querschnitt ist und sich axial an einem Zwischenring abstützt, der innen an seinem klemmringseitigen Ende zur Aufnahme des Spannringes kegelstumpfförmig ist und außen an seinem anderen Ende ebenfalls kegelstumpfförmig ist und an dem Dichtungsring anliegt.

Beim Anziehen der Spannschraube drückt der innen und außen kegelstumpfförmige Spannring den geschlitzten Drahtring radial nach außen, wodurch eine sichere und feste Verankerung des Verschlußelementes in der Bohrung erfolgt. Gleichzeitig wird der Dichtungsring zwischen dem außen kegelstumpfförmigen Ende des Zwischenringes und einem rechtwinkligen Absatz am Verschlußstück eingeklemmt, wodurch sich der Dichtungsring ebenfalls fest an die Bohrung anlegt und eine vollständige und sichere Abdichtung bewirkt. Beim Lösen der Spannschraube gibt der innen und außen kegelstumpfförmige Spannring den im Querschnitt kreisförmigen, geschlitzten Klemmring frei, so daß dieser zurückfedern kann und die kraftschlüssige Verbindung des Verschlußelementes mit der Bohrung aufgehoben wird. Das Verschlußelement läßt sich daraufhin leicht und unproblematisch aus der Bohrung entfernen.

Weitere Merkmale der Erfindung gehen aus den Unteransprüchen hervor.

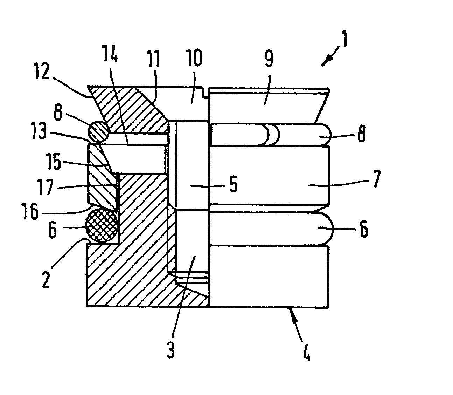

Die Erfindung wird nachstehend anhand eines Ausführungsbeispieles, das in der Zeichnung dargestellt ist, näher beschrieben.

Ein erfindungsgemäßes Verschlußelement 1 besteht aus einem etwa zylindrischen, einen Absatz 2 sowie eine Sackbohrung 3 aufweisenden Verschlußstück 4, auf dem mittels einer Senkkopfschraube 5 ein Dichtungsring 6, ein Zwischenring 7 sowie ein Klemmring 8 und ein Spannring 9 gehalten sind. Der Spannring 9 ist innen zur Aufnahme des Kopfes 10 der Senkkopfschraube 5 kegelstumpfförmig bzw. er weist eine kegelstumpfförmige Innenfläche 11 auf, an der der Kopf 10 der Senkkopfschraube 5 anliegt. Außen ist der Spannring 9 ebenfalls kegelstumpfförmig und weist eine in gleicher Weise wie die Innenfläche 11 gerichtete, kegelstumpfförmige Umfangsfläche 12 auf, an der der geschlitzte Klemmring 8 anliegt. Der Spannring 9 greift in den Klemmring 8 hinein und drückt diesen beim Anziehen der Spannschraube 5 radial nach außen. Der Klemmring 8 liegt ferner an einer Stirnfläche 13 des Zwischenringes 7 an bzw. stützt sich auf dieser Stirnfläche 13 ab. Das klemmringseitige Ende 14 des Zwischenringes 7 ist innen kegelstumpfförmig bzw. weist zur Aufnahme des Spannringes 9 eine kegelstumpfförmige Ausnehmung 15 auf. Das andere Ende 16 des Zwischenringes ist außen kegelstumpfförmig und liegt an dem Dichtungsring 6 an. Mit einer zylindrischen Bohrung 17 umgreift der Zwischenring 7 das Verschlußstück 4 und ist längs diesem verschiebbar.

Beim Anziehen der als Senkkopfschraube 5 ausgebildeten Spannschraube drückt der Spannring 9 den Klemmring 8 radial nach außen sowie gegen die Stirnfläche 13 des Zwischenringes 7, welcher über sein kegelstumpfförmiges Ende 16 den Dichtungsring 6 sowohl gegen den Absatz 2 des Verschlußstückes 4 als auch radial nach außen drückt. Eine sichere Befestigung sowie Abdichtung des Verschlußelementes 1 sind daher gewährleistet.

Die kegelstumpfförmigen Flächen 11 und 12 am Spannring 9, die kegelstumpfförmige Ausnehmung 15 sowie das kegelstumpfförmige Ende 16 am Zwischenring 7 konvergieren in der gleichen Richtung wie der Kopf 10 der Senkkopfschraube 5.

## Patentansprüche

1. Verschlußelement (1) für Bohrungen, das ein Verschlußstück (4) mit einem Absatz für einen Dichtungsring (6) und mit einer Gewindebohrung für eine Spannschraube (5) sowie einen außen kegelstumpfförmigen Spannring (9) und einen geschlitzten Klemmring (8) sowie einen Zwischenring (7) umfaßt, dadurch gekennzeichnet, daß die Spannschraube eine Senkkopfschraube (5) ist, daß der außen kegelstumpfförmige Spannring (9) zugleich zur Aufnahme des Kopfes (10) der Senkkopfschraube (5) innen gleich gerichtet kegelstumpfförmig ist, daß der geschlitzte Klemmring (8) ein Drahtring mit kreisförmigem Querschnitt ist und sich axial an einem Zwischenring (7) abstützt, der innen an seinem klemmseitigen Ende (14) zur Aufnahme des Spannringes (9) kegelstumpfförmig ist und außen an seinem anderen Ende (16) ebenfalls kegelstumpfförmig ist und an dem Dichtungsring (6) anliegt.

2. Verschlußelement nach Anspruch 1, dadurch gekennzeichnet, daß der Klemmring (8) an einer Stirnfläche (13) des Zwischenringes (7) anliegt.

3. Verschlußelement nach Anspruch 1, dadurch gekennzeichnet, daß das Verschlußstück (4) einen rechtwinkligen Absatz (2) zur Aufnahme des Dichtungsringes (6) aufweist.

4. Verschlußelement nach Anspruch 1, dadurch gekennzeichnet, daß die kegelstumpfförmigen Flächen (11 und 12) am Spannring (9), die kegelstumpfförmige Ausnehmung (15) sowie das kegelstumpfförmige Ende (16) am Zwischenring (7) in der gleichen Richtung wie der Kopf (10) der Senkkopfschraube (5) konvergieren.

## Claims

1. A plug element (1) for holes, comprising a closure member (4) with a shoulder for a sealing ring (6) and a threaded hole for a tightening screw (5), a externally frustoconical clamping ring (9), a split gripping ring (8) and an inbetween ring (7), characterized in that the tightening screw is a countersunk head screw (5), in that the outwardly frustoconical gripping ring (9) tapers frustoconically in the same direction as well on the inside for the head (10) of the countersunk head screw (5) to fit into, and in that the split gripping ring (8) is a wire ring with a round cross section and is rested axially against an inbetween ring (7), taht on the inside on its end (14) on the gripping side is made frustoconical for the tightening ring to fit against and on the outside at its other end (16) is frustoconical as well and rests against the sealing ring (6).

2. The plug element as claimed in claim 1 characterized in that the gripping ring (8) rests against a radial face (13) of the inbetween ring (7).

3. The plug element as claimed in claim 1 characterized in that the plug member (4) has a right angled shoulder (2) to have the sealing ring (6) fitted on it.

4. The plug element as claimed in claim 1 characterized in that the frustoconical faces (11 and 12) on the tightening ring (9), the frustoconical hollow (15) and the frustoconical end (16) on the inbetween ring (7) converge in the same direction as the head (10) of the countersunk head screw (5)

## Revendications

1. Obturateur (1) pour trous, comprenant un élément d'obturation (4) muni d'un gradin pour un anneau de joint (6) et d'un trou taraudé pour une vis de serrage (5), ainsi qu'une bague de serrage (9) de forme tronconique extérieurement et une bague de blocage fendue (8) ainsi qu'une bague intermédiaire (7), caractérisé par le fait que la vis de serrage est une vis à tête fraisée (5), que la bague de serrage de forme tronconique extérieurement (9) est en même temps tronconique intérieurement dans le même sens pour loger la tête (10) de la vis à tête fraisée (5), que la bague de blocage fendue (8) est un anneau de fil métallique à section circulaire et s'appuie axialement sur une bague intermédiaire (7) qui est tronconique intérieurement à son extrémité du côté de blocage (14) pour loger la bague de serrage (9) et qu'extérieurement, à son autre extrémité (16), elle est également tronconique et s'applique contre l'anneau de joint (6).

2. Obturateur selon la revendication 1, caractérisé par le fait que la bague de blocage (8) s'applique contre une surface frontale (13) de la bague intermédiaire (7).

3. Obturateur selon la revendication 1, caractérisé par le fait que l'élément d'obturation (4) présente un gradin à angle droit (2) pour recevoir l'anneau de joint (6).

4. Obturateur selon la revendication 1, caractérisé par le fait que les surfaces tronconiques (11 et 12) de la bague de serrage (9), l'évidement tronconique (15) ainsi que l'extrémité tronconique (16) de la bague intermédiaire (7) convergent dans le même sens que la tête (10) de la vis à tête fraisée (5).